# EUROPÄISCHE PATENTSCHRIFT

(11) **EP 1 794 941 B1**
(45) Veröffentlichungstag und Bekanntmachung des Hinweises auf die Patenterteilung: **09.01.2013**
(21) Anmeldenummer: 05787126.1
(22) Anmeldetag: 22.09.2005
(51) Int. Cl.: H04W 8/24, H04W 12/10, H04L 29/06, H04W 12/12, H04W 84/22, H04W 84/04, H04W 88/04, H04W 88/06

(54) **VERFAHREN ZUM SPONTANEN VERTEILEN VON DATEN SOWIE ENTSPRECHENDES DATENNETZ**
METHOD FOR THE SPONTANEOUS DISTRIBUTION OF DATA, AND CORRESPONDING DATA NETWORK
PROCEDE DE DISTRIBUTION SPONTANEE DE DONNEES ET RESEAU DE DONNEES CORRESPONDANT

(30) Priorität: 29.09.2004 DE 102004047364
(43) Veröffentlichungstag der Anmeldung: 13.06.2007
(73) Patentinhaber: Siemens Enterprise Communications GmbH & Co. KG, 81379 München (DE)
(72) Erfinder: BITTERLICH, Jean-Yves, 81549 München (DE)
(74) Vertreter: Fritzsche, Thomas
(86) Internationale Anmeldenummer: PCT/EP2005/054742
(87) Internationale Veröffentlichungsnummer: WO 2006/034987

(56) Entgegenhaltungen:
- EP-A- 1 401 224
- EP-A- 1 435 743
- US-A- 5 790 536
- MOESSNER K ET AL: "SOFTWARE DOWNLOAD ENABLING TERMINAL RECONFIGURABILITY TELECHARGEMENT DE LOGICIEL POUR LA RECONFIGURATION DE TERMINAL" ANNALES DES TELECOMMUNICATIONS - ANNALS OF TELECOMMUNICATIONS, GET LAVOISIER, PARIS, FR, Bd. 57, Nr. 5/6, Mai 2002 (2002-05), Seiten 457-479, XP001122781 ISSN: 0003-4347
- "3rd Generation Partnership Project; Technical Specification Group Services and System Aspects; Support of Push service (Release 5); 3GPP TR 23.875" ETSI STANDARDS, EUROPEAN TELECOMMUNICATIONS STANDARDS INSTITUTE, SOPHIA-ANTIPO, FR, Nr. V510, März 2002 (2002-03), XP014021954 ISSN: 0000-0001
- WEI H-Y ET AL: "TWO-HOP-RELAY ARCHITECTURE FOR NEXT-GENERATION WWAN/WLAN INTEGRATION" IEEE WIRELESS COMMUNICATIONS, IEEE SERVICE CENTER, PISCATAWAY, NJ, US, Bd. 11, Nr. 2, April 2004 (2004-04), Seiten 24-30, XP001196396 ISSN: 1536-1284

## Beschreibung

Die vorliegende Erfindung betrifft ein Verfahren zum Verteilen von Daten, insbesondere Software und/oder Konfigurationsdaten, in einem Datennetz mit mehreren Teilnehmern, die ad hoc-netzwerkfähig sind. Darüber hinaus betrifft die vorliegende Erfindung ein entsprechendes Datennetz mit ad hoc-netzwerkfähigen Teilnehmern und einer Zentraleinrichtung zum Verteilen der Daten.

Die Software-Verwaltung spielt eine zentrale Rolle bei jedem Mobilfunknetzbetreiber bzw. Netzwerk-Operator. Bei mehreren Millionen Teilnehmern sehen sich die Betreiber bzw. Operatoren einem enormen Problem gegenüber: Das Ändern und Aktualisieren von Konfigurationen soll bei allen Terminals gleichzeitig oder in einem überschaubaren zeitlichen Rahmen erfolgen können. Während sich die Standardisierungsgremien darauf konzentrieren, wie das Aktualisieren und Ändern der Konfigurationen auf der Netzwerkseite zu managen und auf der Terminalseite durchzuführen ist, wird grundsätzlich offen gelassen, wie die Betreiber und Operatoren die Vielzahl an Triggern und Verbindungen für die Aktualisierungen und Änderungen handhaben sollen.

Bei dem Software-Management gemäß dem "SyncML/DM", einem Standard der OMA, erfolgt die Softwareverteilung gegebenenfalls mit Hilfe eines SMS-Triggers. Der Operator sendet eine SMS an Millionen von Terminals um sie zu triggern bzw. aufzufordern, einen Konfigurations-Management-Server zu kontaktieren. Diese Lösung ist jedoch sehr teuer und braucht eine sehr hohe Bandbreite.

Bei dem Datennetz "Enterprise Networking" gibt es mehrere SNMP-basierte Lösungen entsprechend einem Standard der IETF.

Dabei reagieren einzelne Stationen auf bestimmte Gruppenruf- oder Sammelruf-Datenpakete (multicast/broadcast pakets). Diese Lösung ist zweckmäßig bei kleinen Netzwerken, aber nicht günstig für ein Netzwerk der Größe von Mobilfunkbetreibern.

In EP 1 401 224 A1 ist ein Verfahren des Herunterladens von Software zu einem Software-definierbaren Radio beschrieben, das eine Bestimmung einer oder mehrerer Konfigurationsprofiländerung(en) des Software-definierbaren Radios umfasst. Software wird zu einer zwischengeschalteten Kommunikationseinheit in Erwiderung auf die Ermittlung heruntergeladen, die dann das Software-definierbare Radio rekonfiguriert.

In US 5,790,536 ist ein hierarchisches Kommunikationssystem beschrieben, das in einer überspannenden Baumkonfiguration angeordnet ist, wobei drahtgebundene und drahtlose Kommunikationsnetze verwendet werden um tragbare oder mobile Rechenvorrichtungen miteinander zu verbinden. Kopien von Daten, von Programmcode und von Verarbeitungsressourcen werden von ihrer Quelle in Richtung anfragender Ziele geleitet, basierend auf der Anforderungshäufigkeit, den Kommunikationsverbindungskosten und vorhandenem örtlichen Speicher und/oder Verarbeitungsressourcen.

Die Aufgabe der vorliegenden Erfindung besteht somit darin, ein Verfahren bereitzustellen, mit dem eine Aktualisierung bzw. Änderung der Konfigurationen einer Vielzahl von Terminals einfacher durchgeführt werden kann. Darüber hinaus soll ein entsprechendes Datennetz angegeben werden.

Erfindungsgemäß wird diese Aufgabe gelöst durch ein Verfahren zum Verteilen von Daten, insbesondere Software und/oder Konfigurationsdaten, in einem Datennetz mit mehreren Teilnehmern, die ad hoc-netzwerkfähig sind, durch Senden der Daten von einer Zentralstelle an einen ersten der mehreren Teilnehmer, Aufbauen einer spontanen Kommunikationsverbindung zwischen dem ersten und einem zweiten Teilnehmer und Senden der Daten von dem ersten Teilnehmer an den zweiten Teilnehmer über die spontane Kommunikationsverbindung, wobei das Senden der Daten, entweder automatisch durch den ersten Teilnehmer erfolgt, wenn er mit dem zweiten Teilnehmer die spontane Kommunikation aufbaut, oder nach einem Angebot der Daten durch den ersten Teilnehmer bei dem zweiten Teilnehmer erfolgt, falls der zweite Teilnehmer den Empfang der Daten nicht verweigert.

Darüber hinaus ist erfindungsgemäß vorgesehen ein Datennetz mit mindestens einem ersten und einem zweiten Teilnehmer, die ad hoc-netzwerkfähig sind, und einer Zentraleinrichtung zum Verteilen von Daten, insbesondere von Software und/oder Konfigurationsdaten, wobei von der Zentraleinrichtung die Daten an den ersten Teilnehmer übertragbar sind, zwischen dem ersten und zweiten Teilnehmer eine spontane Kommunikationsverbindung aufbaubar ist und die Daten direkt von dem ersten Teilnehmer an den zweiten Teilnehmer über die spontane Kommunikationsverbindung übertragbar sind.

In vorteilhafter Weise ist es damit möglich, dass die Betreiber und Operatoren nicht mehr alle Geräte bzw. Teilnehmer für die Aktualisierungen und Änderungen der Konfigurationen bzw. Software triggern müssen. Sie müssen lediglich einer Untermenge von Teilnehmern vorzugsweise in ausgewählten Funkzellen, Software oder Konfigurationsdaten zusenden. Die Daten werden durch spontane Kommunikation, d.h. ad hoc-Netzwerke, weiter verteilt. Dies erspart Energie und Bandbreite und mithin Geld.

Falls das Senden der Daten automatisch durch den ersten Teilnehmer erfolgt, wenn er mit dem zweiten Teilnehmer die spontane Kommunikation bzw. das ad hoc-Netzwerk aufbaut, bedeutet dies, dass der erste Teilnehmer der aktive Part ist und der zweite Teilnehmer lediglich zu entscheiden hat, ob er über die Daten bereits verfügt und sie gegebenenfalls verwirft.

Sobald einer der mehreren Teilnehmer über einen vollständigen Datensatz verfügt, kann bei ihm eine Installation oder ein Setup gestartet werden. Dadurch muss sich der Teilnehmer nicht mit Installationen und Setups abmühen.

Vorzugsweise wird die spontane Kommunikation mit einer Sicherheitseinrichtung überprüft. Hierzu kann speziell eine Signatur der Zentralstelle bzw. des Operators oder eines Geräteherstellers beispielsweise von Mobiltelefonen übermittelt werden. Auf diese Weise kann für Installationsprozeduren eine erhöhte Sicherheit bezüglich der Authentizität der Daten gewährleistet werden.

Die spontane Kommunikation kann mittels Bluetooth, drahtlosem USB oder WLAN aufgebaut werden. Somit kann auf bekannte Standards zurückgegriffen werden.

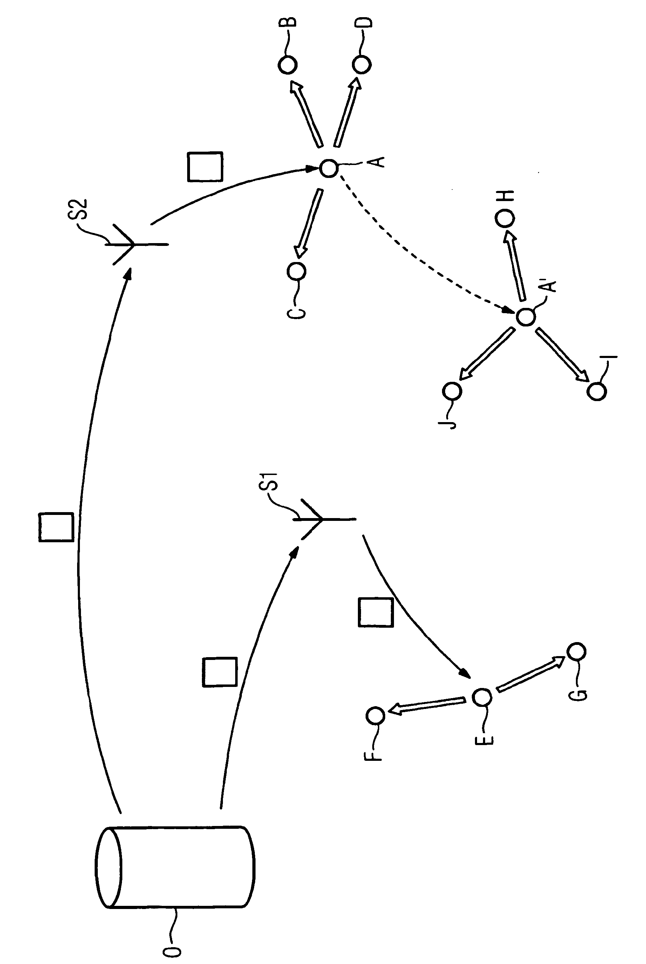

Die vorliegende Erfindung wird nun anhand der beigefügten Zeichnung näher erläutert, die ein erfindungsgemäßes Datennetz prinzipiell widerspiegelt.

Das nachfolgend näher geschilderte Ausführungsbeispiel stellt eine bevorzugte Ausführungsform der vorliegenden Erfindung dar.

Die erfindungsgemäße Lösung basiert auf einem P2P-Software-Management-Verteilungs-Prinzip (peer to peer). Dabei werden Daten, die für die Aktualisierung oder Änderung der Software bzw. Konfiguration notwendig sind, von einer Zentrale über ein großflächiges Datennetz an "ausgewählte" Geräte gesendet und anschließend über ad hoc-Netzwerke durch spontane Kommunikation von den "ausgewählten" Geräten an weitere Geräte weitergegeben.

Dies bedeutet, dass das verteilungsprinzip analog dem Ausbreitungsphänomen von Viren gestaltet ist. Darüber hinaus wird die Tatsache ausgenutzt, dass spontane Kommunikationsverbindungen kurzer Reichweite für immer mehr Mobilfunktelefone vorgesehen werden.

Die Grundidee für die erfindungsgemäße Datenverteilung ist, einen aktualisierten Satz an Parametern bzw. eine neue Konfiguration an eine kritische und gut verteilte Masse von Geräten unter Ausnutzung der bekannten Gerätepositionen zu senden. Als Geräteposition genügt beispielsweise die Position einer Zelle, in der sich das Mobilfunkgerät befindet.

Es ist davon auszugehen, dass sich die Teilnehmer innerhalb der Zelle bewegen und gegebenenfalls die Zelle verlassen. Wenn die Teilnehmer immer wieder spontane Kommunikation mit benachbarten Teilnehmern ausführen, verbreitet sich auf diese Weise die "Nachricht" bzw. neue Konfiguration. Hierzu müssen die Terminals selbstverständlich dazu ausgelegt sein, die Nachricht an andere Geräte weiterzugeben. Als Verbindungstechnologien eignen sich beispielsweise Bluetooth, WLAN, drahtloses USB usw.

Für die spontane Kommunikation ist auch die Sicherheit in der Regel von höchster Bedeutung. Es muss sichergestellt sein, dass die Daten von einer authentischen Quelle stammen. Hierzu kann beispielsweise jede Verbindung und jeder Datenaustausch zwischen Terminals durch eine anerkannte Signatur des Betreibers bzw. Operators oder des Herstellers-geschützt werden.

In vorteilhafter Weise kann das erfindungsgemäße Verfahren auf zwei verschiedenen logischen Ebenen durchgeführt werden: Der Operator-Ebene und der Terminal-Ebene. Dies bedeutet, dass auf der Operator-Ebene operatorspezifische Daten der Netzbetreiber verbreitet werden können. Andererseits können hersteller- bzw. terminalspezifische Daten auf der Terminal-Ebene verbreitet werden.

Das erfindungsgemäße Verfahren kann unabhängig von der Verbreitungsebene sowohl für einfache Parameter als auch für komplexe Daten Verwendung finden.

In dem Beispiel der Figur stellt der Operator O einen Datensatz zur Verfügung, mit dem die Teilnehmer A bis J eines Mobilfunknetzes neu konfiguriert werden sollen.

Der Datensatz ist in der Figur mit einem Rechteck symbolisiert. Er ist virenartig an alle Teilnehmer A bis J zu verteilen. In dem konkreten Beispiel sendet der Operator O den Datensatz jeweils an eine Sendestation S1 und eine Sendestation S2 (durchgezogene Pfeile in der Figur). Der Einfachheit halber wurden lediglich zwei Sendestationen, die beispielsweise jeweils eine Zelle versorgen, dargestellt. Die Sendestation S1 sendet über das Datennetz den Datensatz zu einem Teilnehmer bzw. Terminal E (ebenfalls durchgezogener Pfeil). In gleicher Weise sendet die Sendestation S2 den Datensatz an einen Teilnehmer A. Sowohl der Teilnehmer A als auch der Teilnehmer E bauen mit benachbarten Teilnehmern bzw. Terminals ad hoc-Netzwerke, d.h. spontane Kommunikationsverbindungen (Doppelpfeile in der Figur), auf, da sie über die zu verbreitenden Datensätze verfügen. Im konkreten Fall überträgt der Teilnehmer E den Datensatz über spontane Kommunikationsverbindungen zu den Teilnehmern F und G. In gleicher Weise überträgt der Teilnehmer A den Datensatz an die Teilnehmer B, C und D.

Voraussetzung für die Verbreitung des Datensatzes ist, dass sich die einzelnen Teilnehmer bewegen, wie dies oben bereits geschildert wurde. Im vorliegenden Beispiel bewegt sich der Teilnehmer A zu einer Position A' (gestrichelter Pfeil in der Figur). Dort gerät er in die Nähe der Teilnehmer H, I und J, mit denen er eine spontane Kommunikationsverbindung geringer Reichweite (Short Range) aufbauen kann. Über diese Verbindungen überträgt der Teilnehmer A bzw. A' die Datensätze auch an diese Teilnehmer H, I und J.

Die Verbreitung des Datensatzes erfolgt erfindungsgemäß also dadurch, dass ein Teilnehmer, der im Besitz des zu verbreitenden Datensatzes ist, diesen an benachbarte Teilnehmer weitergibt bzw. den Nachbarn anbietet. Falls die durch die spontane Kommunikation angesprochenen Teilnehmer bereits über den Datensatz verfügen, können sie den Empfang verweigern bzw. den neu empfangenen Datensatz verwerfen.

### Bezugszeichenliste

- A-J: Teilnehmer
- A': Teilnehmer an neuer Position
- O: Operator
- S1, S2: Sendestationen

## Patentansprüche

1. Verfahren zum Verteilen von Daten, insbesondere Software und/oder Konfigurationsdaten, in einem Datennetz mit mehreren Teilnehmern (A bis J), die ad hoc-netzwerkfähig sind,
- Senden der Daten von einer Zentralstelle (O) an einen ersten (A, E) der mehreren Teilnehmer,
- umfassend **gekennzeichnet durch** Aufbauen einer spontanen Kommunikationsverbindung zwischen dem ersten (A, E) und einem zweiten Teilnehmer (B, C, D, F, G) und
- Senden der Daten von dem ersten Teilnehmer (A) an den zweiten Teilnehmer (B, C, D, F, G) über die spontane Kommunikationsverbindung, wobei das Senden der Daten entweder automatisch **durch** den ersten Teilnehmer (A, E) erfolgt, wenn er mit dem zweiten Teilnehmer (B, C, D, F, G) die spontane Kommunikation aufbaut, oder nach einem Angebot der Daten durch den ersten Teilnehmer (A, E) bei dem zweiten Teilnehmer (B, C, D, F, G) erfolgt, falls der zweite Teilnehmer (B, C, D, F, G) den Empfang der Daten nicht verweigert.

2. Verfahren nach Anspruch 1, wobei der zweite Teilnehmer (B, C, D, F, G) die automatisch empfangenen Daten verwirft oder den Empfang der angebotenen Daten verweigert, falls der zweite Teilnehmer (B, C, D, F, G) bereits über die Daten verfügt.

3. Verfahren nach einem der vorhergehenden Ansprüche mit dem weiteren Schritt des Startens einer Installation oder eines Setups, wenn einer der mehreren Teilnehmer die Daten vollständig übertragen bekommen hat.

4. Verfahren nach einem der vorhergehenden Ansprüche, wobei die spontane Kommunikation mittels Bluetooth, drahtlosem USB oder WLAN aufgebaut wird.

5. Verfahren nach einem der vorhergehenden Ansprüche, wobei die spontane Kommunikation mit einer Sicherheitseinrichtung überprüft wird.

6. Verfahren nach Anspruch 5, wobei bei der spontanen Kommunikation eine Signatur der Zentralstelle oder eines Geräteherstellers übermittelt wird.

7. Datennetz mit
- mindestens einem ersten (A, E) und einem zweiten Teilnehmer (B, C, D, F, G), die ad hoc-netzwerkfähig sind, und
- einer Zentraleinrichtung (O) zum Verteilen von Daten, insbesondere von Software und/oder Konfigurationsdaten, und eingerichtet,
- von der Zentraleinrichtung (O) die Daten an den ersten (A, E) Teilnehmer zu übertragen,
**dadurch gekennzeichnet, dass** es weiter eingerichtet ist,
- zwischen dem ersten und zweiten Teilnehmer eine spontane Kommunikationsverbindung aufzuhbauen und
- die Daten direkt von dem ersten Teilnehmer (A, E) an den zweiten Teilnehmer (B, C, D, F, G) über die spontane Kommunikationsverbindung zu übertragen, dabei die Daten entweder automatisch durch den ersten Teilnehmer (A, E) an den zweiten Teilnehmer (B, C, D, F, G) zu übertragen, wenn die beiden Teilnehmer eine spontane Kommunikation aufbauen, oder da Daten zu übertragen nach einem Angebot der Daten durch den ersten Teilnehmer (A, E) bei dem zweiten Teilnehmer (B, C, D, F, G), falls der zweite Teilnehmer (B, C, D, F, G) den Empfang der Daten nicht verweigert hat.

8. Datennetz nach Anspruch 7, weiter eingerichtet, durch den zweiten Teilnehmer (B, C, D, F, G) die automatisch empfangenen Daten zu verwerfen oder den Empfang der angebotenen Daten zu verweigern, falls der zweite Teilnehmer (B, C, D, F, G) bereits über die Daten verfügt.

9. Datennetz nach Anspruch 7 oder 8, weiter eingerichtet, in einem der Teilnehmer eine Installation oder einen Setup automatisch zu starten, wenn der Teilnehmer die Daten vollständig übertragen bekommen hat.

10. Datennetz nach einem der Ansprüche 7 bis 9, weiter eingerichtet, die spontane Kommunikation zwischen den Teilnehmern mittels Bluetooth, drahtlosem USB oder WLAN aufzubauen.

11. Datennetz nach einem der Ansprüche 7 bis 10, das eine Sicherheitseinrichtung aufweist, eingerichtet die spontane Kommunikation zu überprüfen.

12. Datennetz nach Anspruch 11, weiter angerichtet, bei der spontanen Kommunikation eine Signatur der Zentralstelle oder eines Geräteherstellers zu übertragen.

## Claims

1. Method for distribution of data, especially software and/or configuration data, in a data network with a number of users (A to J) who have ad-hoc networking capabilities, comprising
- sending of the data from a central location (O) to a first (A, E) of the number of users,
**characterised by**
- establishing a spontaneous communication link between the first (A, E) and a second user (B, C, D, F, G) and
- sending of the data from the first user (A) to the second user (B, C, D, F, G) via the spontaneous communication link, wherein the data is sent either automatically by the first user (A, E) if he establishes the spontaneous communication with the second user (B, C, D, F, G) or after an offer of the data by the first user (A, E) to the second user (B, C, D, F, G), if the second user (B, C, D, F, G) does not refuse receipt of the data.

2. Method according to claim 1, wherein the second user (B, C, D, F, G) discards the automatically received data or refuses receipt of the data offered if the second user (B, C, D, F, G) already has the data available.

3. Method according to any one of the preceding claims with the further step of starting an installation or a setup if one of the number of users has fully received the data transmitted.

4. Method according to any one of the preceding claims, wherein the spontaneous communication is established by means of Bluetooth, wireless USB or WLAN.

5. Method according to any one of the preceding claims, wherein the spontaneous communication is checked with a security facility.

6. Method according to claim 5, wherein, during the spontaneous communication, a signature of the central location or a device manufacturer is transmitted.

7. Data network with
- at least a first (A, E) and a second user (B, C, D, F, G) who have ad-hoc networking capabilities, and
- a central facility (O) for the distribution of data, especially of software and/or configuration data, and configured
- that the central facility (O) shall transmit the data to the first (A, E) user, **characterised in that** it is further configured
- to establish, between the first and second user, a spontaneous communication link and
- to directly transfer the data from the first user (A, E) to the second user (B, C, D, F, G) via the spontaneous communication link, with the data to be transmitted either automatically by the first user (A, E) to the second user (B, C, D, F, G) if the two users establish a spontaneous communication, or as data is to be transmitted after an offer of the data by the first user (A, E) to the second user (B, C, D, F, G) if the second user (B, C, D, F, G) has not refused receipt of the data.

8. Data network according to claim 7, further configured by the second user (B, C, D, F, G) to discard the data automatically received or refuse receipt of the data offered if the second user (B, C, D, F, G) already has the data available.

9. Data network according to claim 7 or 8, further configured for one of the users to automatically start an installation or a setup if the user has fully received the data transmitted.

10. Data network according to any one of claims 7 to 9, further configured to establish the spontaneous communication between the users by means of Bluetooth, wireless USB or WLAN.

11. Data network according to any one of claims 7 to 10, which has a security device, configured to check the spontaneous communication.

12. Data network according to claim 11, further configured to transmit, during the spontaneous communication, a signature of the central location or of a device manufacturer.

## Revendications

1. Procédé servant à distribuer des données, en particulier des logiciels et/ou des données de configuration, dans un réseau de données comportant plusieurs abonnés (A à J) réseau ad hoc,
comportant
- l'envoi des données depuis un poste central (O) à un premier abonné (A, E) parmi les nombreux abonnés, **caractérisé par**
- l'établissement d'une liaison de communication spontanée entre le premier abonné (A, E) et un deuxième abonné (B, C, D, F, G) et
- l'envoi des données du premier abonné (A) au deuxième abonné (B, C, D, F, G) par l'intermédiaire d'une liaison de communication spontanée, sachant que l'envoi des données se fait soit automatiquement par le premier abonné (A, E), lorsqu'il établit la communication spontanée avec le deuxième abonné (B, C, D, F, G), soit s'effectue dans le cas du deuxième abonné (B, C, D, F, G) sur proposition des données par le premier abonné (A, E) si le deuxième abonné (B, C, D, F, G) ne refuse pas la réception des données.

2. Procédé selon la revendication 1, sachant que le deuxième abonné (B, C, D, F, G) rejette les données automatiquement reçues ou refuse la réception des données proposées, si le deuxième abonné (B, C, D, F, G) dispose déjà des données.

3. Procédé selon l'une quelconque des revendications précédentes comportant l'étape supplémentaire consistant à démarrer une installation ou consistant en une configuration, lorsqu'un des nombreux abonnés a reçu les données transférées en totalité.

4. Procédé selon l'une quelconque des revendications précédentes, sachant que la communication spontanée est établie au moyen du Bluetooth, d'un USB ou LAN sans fil.

5. Procédé selon l'une quelconque des revendications précédentes, sachant que la communication spontanée est surveillée par un dispositif de sécurité.

6. Procédé selon la revendication 5, sachant qu'une signature du poste central ou d'un fabricant d'appareils est communiquée lors de la communication spontanée.

7. Réseau de données comportant
- au moins une premier abonné (A, E) et un deuxième abonné (B, C, D, F, G) réseau ad hoc et
- un dispositif central (O) servant à distribuer des données, en particulier des logiciels et/ou des données de configuration,
et installé
- pour transférer les données au premier abonné (A, E) depuis le dispositif central (O),
**caractérisé en ce qu'**il est installé en outre
- pour établir une liaison de communication spontanée entre le premier abonné et le deuxième abonné et
- pour transférer les données directement depuis le premier abonné (A, E) au deuxième abonné (B, C, D, F, G) par l'intermédiaire d'une liaison de communication spontanée, et dans ce cadre pour transférer les données soit automatiquement par le premier abonné (A, E) au deuxième abonné (B, C, D, F, G), lorsque les deux abonnées établissent une communication spontanée, soit pour transférer les données sur proposition des données par le premier abonné (A, E) dans le cas du deuxième abonné (B, C, D, F, G), si le deuxième abonné (B, C, D, F, G) n'a pas refusé la réception des données.

8. Réseau de données selon la revendication 7, installé en outre pour rejeter par le deuxième abonné (B, C, D, F, G) les données automatiquement reçues ou pour refuser la réception des données proposées, si le deuxième abonné (B, C, D, F, G) dispose déjà des données.

9. Réseau de données selon la revendication 7 ou 8, installé en outre pour démarrer automatiquement dans l'un des abonnés une installation ou une configuration, lorsque l'abonné a reçu les données transférées en totalité.

10. Réseau de données selon l'une quelconque des revendications 7 à 9, installé en outre pour établir la communication spontanée entre les abonnées au moyen du Bluetooth, d'un USB ou LAN sans fil.

11. Réseau de données selon l'une quelconque des revendications 7 à 10, qui présente un dispositif de sécurité, installé pour surveiller la communication spontanée.

12. Réseau de données selon la revendication 11, installé en outre pour transférer dans le cas d'une communication spontanée une signature du poste central ou d'un fabricant d'appareils.
